# EUROPEAN PATENT SPECIFICATION

(11) **EP 1 395 498 B1**
(45) Date of publication and mention of the grant of the patent: **06.12.2006**
(21) Application number: 02736002.3
(22) Date of filing: 22.05.2002
(51) Int. Cl.: B65D 65/38

(54) **PROCESS AND APPARATUS FOR THE PRODUCTION OF A REINFORCED WRAPPING FILM WITH LOCALISED WEAKENED ZONES**
VERFAHREN UND VORRICHTUNG ZUM HERSTELLEN EINER VERSTÄRKTEN VERPACKUNGSFOLIE MIT LOKALISIERTEN GESCHWÄCHTEN ZONEN
PROCEDE ET DISPOSITIF POUR LA PRODUCTION D'UN FILM POUR EMBALLAGE RENFORCE, DOTE DE ZONES DE FAIBLESSE LOCALISEES

(30) Priority: 23.05.2001 IT RM20010281
(43) Date of publication of application: 10.03.2004
(73) Proprietor: AKRO-FLEX S.a.s. di Garegnani Antonio & C., 20080 Vermezzo (MI) (IT)
(72) Inventor: GAREGNANI, Antonio, I-20080 Vermezzo (IT)
(74) Representative: Sarpi, Maurizio
(86) International application number: PCT/IT2002/000333
(87) International publication number: WO 2002/094674

(56) References cited:
- EP-A- 0 909 721
- WO-A-01/60709

## Description

The present invention relates to an improved process for the production of reinforced stretchable film, preferably of polyethylene, adapted also for palletization of product which must transpire, such as, for example, fruit and vegetable products.

At present the use of stretchable polyethylene films is known for wrapping the goods. Depending on the kind of goods, on their weight and volume, films with different thickness are used and since such films are purchased by weight, it is obvious that the package costs increase proportionally to the thickness of the film and therefore it is useful to limit the thickness of the wrapping films for reducing the production costs.

There are also known, for example from EP-A-909721, wrapping films which are pierced and provided with longitudinal strips, which should be placed between the rows of holes for avoiding their closure and are preferably pre-stretched for increasing their resistance.

A drawback of said films consists in that, if the perforation is performed with material removal, the weight of the film is reduced and the unitary cost (calculated by weight) increases, while if the perforation is made by tearing away, without the removal of material, the weight remains unchanged, but the spools, on which the finished product is wound, have greater radial extension and thus the film length which may be wound is shorter with respect to the previous case.

A further problem of the presently used films consists in that at present it is necessary to use films with a certain thickness (about 35÷40 *µ*m) for palletization of very heavy goods, with evident production costs.

Thus, a first object of the invention is that to realize a reinforced film, which even if having a limited thickness, assures a resistance suitable also for packages of heavy charges.

A second object of the invention is that to realize a reinforced film utilisable for palletising products which must transpire.

This has been attained according to the invention by a process according to claim 1 for the realization of a thin stretchable film, reinforced with longitudinal strips, which film is provided with localized weakened zones (or microdamagings), which are distributed on its surface, said reinforced strips being provided with lapelled edges and preferably are pre-stretched for increasing their mechanical resistance. According to a peculiar feature of the invention, said weakening zones are specifically adapted to cause controlled tearings (and thus slits) of the film, when it is stretched beyond a certain elongation during the wrapping operation.

Also an apparatus according to claim 8 for the realization of said film by the above said process is an object of the present invention.

The invention will be better understood from the following detailed disclosure with reference to a preferred embodiment thereof, shown in way of a non limiting example in the enclosed drawings, in which:
Figure 1 schematically shows the main elements which form the device for performing the process according to the invention;
Figure 2 schematically shows the edging operation of the longitudinal reinforcement strips;
Figure 3 schematically shows a modification of the device of Fig. 1, relating to means for carrying out microdamages in the film.

The process according to the invention initially provides to carry out, on the surface of the stretchable film F to be reinforced, a plurality of microdamages ML.

After having carried out such operation, the microdamaged film F is joint with longitudinal reinforcing strips S, which preferably are p0restretched and edged: said edging is attained by inwardly folding the strip edges.

According to a peculiar feature of the present invention, said strips S, parallel to one another, cover determined area of the surface of the film F and leave discovered the other ones: when the film is stretched beyond a certain elongation, only in the area non covered by the strips S damages and slits are formed, which allow the wrapped products to transpire.

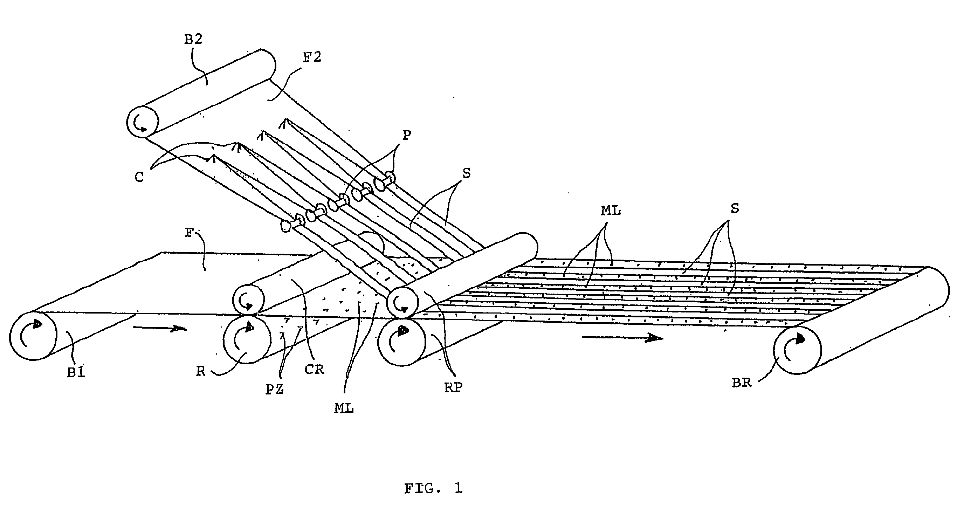

Said strips S may be indifferently fed from a spool or directly formed from a second stretchable film F2 (Fig. 1), by guiding said film on a plurality of knives C which divide it in longitudinal strips to be thereafter transversally narrowed by a longitudinal stretching: in this way, starting from a second film F2, preferably having the same width of the microdamaged film F, there are realized parallel strips, which are enough narrow to be joined to the microdamaged film itself, by leaving some uncovered zones.

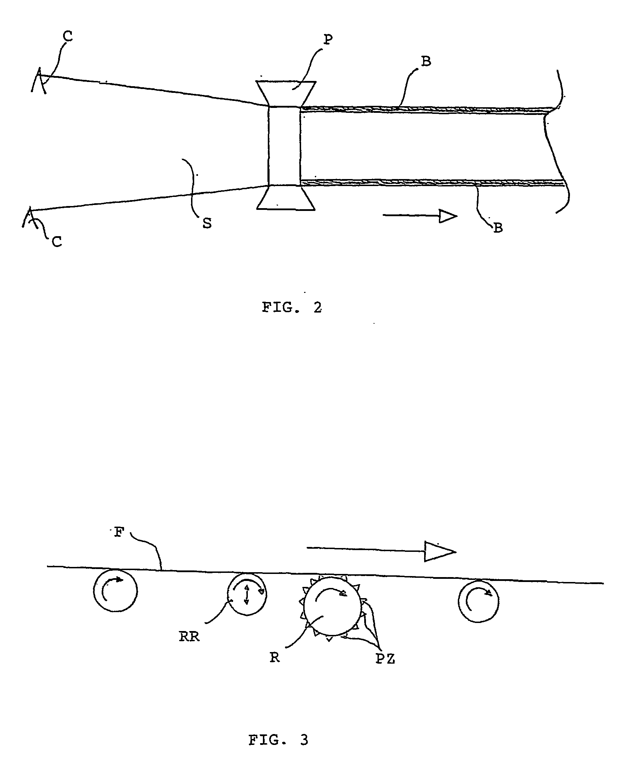

As already mentioned, said strips S are edged before being joined to the film F: said edging is performed, for example, by moving the strips on pulley P having grooves with a flat bottom and inclined walls (Fig. 3), the width of which at the bottom is less that that of the strips at the inlet, so as to cause the desired folding of the strip edge.

As to the microdamages ML of the film F, in the embodiment shown it is provided to move the film by means of a roller R having small projecting punches PZ and a counter-roller CR pressing the film F on said punches, thus forming local weakenings or damages ML without removing or tearing away the material.

Therefore, the process for producing a microdamaged and reinforced film according to the invention substantially comprises the following steps:
1. Realizing of microdamages ML distributed on the surface of an elastic stretchable film F;
2. Cutting a second film F2 to form longitudinal reinforcement strips S, then stretching and edging these strips for narrowing them and increasing their resistance;
3. Joining said edges strips S and said microdamaged film F to one another by passing them between two pressure rules RP;
4. Winding the microdamaged and reinforced film, thus obtained, on a collecting spool BR.

Obviously, when the strips are already winded on a spool, the above said step 2 does not include the cutting operation.

Referring now particularly to the figure 1, the device for carrying out said process comprises:
- a first spool B1 on which the first film F, to be microdamaged, is stored;
- a roller R provided with projecting punches P2 apt to form small localized weakened zones or microdamages on the film F and a counter-roller CR which presses the film F against said punches PZ;
- a second spool BR on which a second film F2, is stocked, which is to be divided in longitudinal strips S to be joined with the previous microdamaged film F, after their stretching and edging B;
- a plurality of knives C apt to divide the second film F2 into longitudinal strips S;
- a couple of joining pressure rules, rotating in opposite directions, apt to superpose the stretchable edged strips S on the microdamaged film F;
- a collecting spool BC for the film provided with localized weakening zones and reinforced by said longitudinal strips S.

It will be now disclosed a preferred embodiment of the invention, in which the film F2, to be cut in longitudinal strips S, moves at a speed lower than that of the microdamaged film F, so that the strips S themselves are longitudinal stretched and narrowed, so as to reach a width slightly greater than that of the pulleys P, which perform the edging thereof.

As clearly shown in the figure 1, said punching roller R and said counter-roller CR are placed between the spool B1, on which the film to be microdamaged F is stocked, and the joining pressure rollers RP, a series of knives C being arranged between the spool B2, on which the second film F2, to be cut in longitudinal strips S, and the joining rollers RS, whereas the pulleys P, for edging the strips S, are placed straight above them.

It is obvious, that the width of the strips S depend on the stretching degree thereof and thus it can be changed advantageously by simply varying the tangential speed of the roller B2, on which initially the second film is wound, with respect to that of the joining rollers RP. According to a further peculiar feature of the invention, by changing the stretching degree of the strips, also the edging degree thereof changes.

In other words, the joining rollers RP have the same tangential speed of the spool B1, film F and roller R, with its counter-roller CR, which cause a microdamaging ML of the film F, whereas the spool B2 of the second film F2, to be cut into strips, has a lower speed.

Preferably, said joining rollers consist of a rubberized pressure roller and a motorized metal control motor.

It is also obvious that it would be advisable, even if not obligatory, to provide one or more tension and/or transmission rollers, apt to regularize the motion of the films and/or strips, as well as to maintain them in tensioned and extended condition during their advancement motion between the rollers.

Moreover, it should be also noted that under the equal weight, the locally damaged and reinforced film according to the invention, is substantially more elastic with respect to the films as at present available on the market and thus it is in condition of allowing very much greater elongations during the wrapping operations.

Referring now to figure 3, an alternative embodiment of the device is not provided with a counter-roller CR, but is provided, upstream the punching roller P, with as adjustment roller RR variable in its height, so as to exactly regulate the extent of the microdamages ML which are formed in the film F.

Such embodiment is attained by displacement of the adjustment roller RR for changing the distance between the extended film F and the roller R, provided with punches or projections PZ.

Particularly, it is possible to reduce the microdamages ML till to their total elimination (the film F does not contact the punches or projections PZ) or to increase them till to attaining the formation of lacerations in the film F.

Finally, the rotation speed of the punching roller R is adjustable, in preference independently from the advancement speed of the film F.

The present invention has been disclosed and illustrated in a preferred embodiment thereof, but it is obvious that a skilled in the art could perform equivalent modifications and replacements without going out from protection scope of the present invention.

## Claims

1. A process for the production of a thin, reinforced stretchable wrapping film, **characterized in that** initially it provides to realize, on the surface of a stretchable film (F) to be reinforced, a plurality of microdamages (ML) and then to join the microdamaged film (F) to longitudinal pre-stretched and edged reinforcement strips; said edging (B) being attained by inwardly folding the strip edges.

2. A process for the production of a thin, reinforced stretchable wrapping film according to claim 1, **characterized in that** said strips (S), parallel to one another, cover established zone of the film (F) surface and leave uncovered other ones, so that the film is stretched beyond a certain elongation degree, in zones not covered by the strips (S) there being formed at some damages or slits, which allow the wrapped products to transpire, said slits being formed localized weakening zones or microdamages (ML) formed in the film (F).

3. A process for the production of a thin, reinforced stretchable wrapping film according to any one of the preceding claims, **characterized in that** the above said strips are supplied from a spool or are directly obtained from a second stretchable film (F2) by passing said second film on a plurality of knives (C) which divide it into longitudinal strips, which afterwards are transversally narrowed by a longitudinal stretchment, obtaining thus parallel strips (S) which are enough narrow for being joined to the above said microdamaged film (F) and leaving uncovered zones therebetween.

4. A process for the production of a thin, reinforced stretchable wrapping film according to any one of the preceding claims, **characterized in that** before being joined to the film (F) said strips (S) are edged by passing them through pulleys (P) provided with grooves having a flat bottom and inclined walls, the width at the groove bottom being lesser than that of the incoming strips, so as to cause the desired folding of the strip edges.

5. A process for the production of a thin, reinforced stretchable wrapping film according to any one of the preceding claims, **characterized in that** for carrying out the microdamages (ML) on the film (F), said film is passed between a roller (R) provided with small projecting punches (PZ) and a counter-roller (CR) which presses the film (F) against said punches, thus causing local weakenings or microdamages (ML), without removing and tearing away of material.

6. A process for production of a stretchable film (F) according to claim 1, **characterized in that** it substantially comprises the following steps to be carried on the film (F) of an elastic stretchable material having a plurality of microdamages (ML) distributed on its surface:
a) cutting a second film (F2) in longitudinal reinforcing strips (S) and stretching and edging said strips for narrowing them and increasing their resistance;
b) joining said edged strips (S) with said microdamaged film (F) by passing them through a pair of pressure rollers (RP);
c) winding so obtained microdamaged and reinforced film on a collecting spool (BR).

7. A process for production of a stretchable film according to the preceding claim, **characterized in that** if the strips are already wound on a spool, it is obvious that the above said step a) does not provide the cutting operation.

8. A device for producing a stretchable film according to the process of claim 1, **characterized in that** it comprises:
- a first spool (B1) on which a first film (F) to be microdamaged is wound;
- a roller (R) provided with projecting punches (P1) apt to realize small localized weakenings or microdamages on the film (F) and a counter-roller (CR) which presses the film (F) against said punches (PZ);
- a second spool (BR) on which a second film (F2) is collected, which is intended to be divided in longitudinal strips (S) to be joined to the above said microdamaged film (F) after their stretching and edging (B);
- means (P) for edging said strips (S);
- a plurality of knives (c) apt to divide the second film (F2) into longitudinal strips (S);
- a pair of joining pressure rollers (RP) rotating in opposite directions, apt to superimpose the stretched and edged strips (S) on the microdamaged film (F);
- a collection spool (BC) for the film provided with localized weakening zones and reinforced by said longitudinal strips (S);

9. A device according to the preceding claim, **characterized in that** the film (F2) to be cut in longitudinal strips (S) moves at a speed which is lower than that of the microdamaged film (F), so that the strips are longitudinally stretched and thus narrowed so as to reach a width slightly greater of that of pulleys (P), which carry out their edging.

10. A device according to claim 8 or 9, **characterized in that** said punching roller (R) and said counter-roller (CR) are arranged between the spool (B1), on which the film (F) to be microdamaged is stocked, and the joining pressure rollers (RP), the series of knives (C) is arranged between the spool (B2), on which the second film (F2), to be cut in longitudinal strips (S), and the said joining rollers (RP), whereas pulleys (P), for edging (B) the strips (S), are placed immediately there above.

11. A device according to any one of the claims 8 to 10, **characterized in that** the above said joining rollers (RP) are formed by a rubberized idle pressure roller and a metallic, motorized control roller.

12. A device according to any one of the claims 8 to 11, **characterized in that** it comprises one or more tension and/or transmission rollers, apt to regularize the motion of the films and maintain them in tensioned and stretched conditions.

13. A device according to any one of the claims 8 to 12, **characterized in that** when on the second spool (B2) there are already stocked strips (S), the knives (C) are not utilized.

14. A device according to any one of the claims 8 to 13, **characterized in that** it has no counter-roller (CR) and is provided with an adjustable roller (RR), which is displaceable for changing the distance between the film (F) and punching roller (R) for adjusting thus the entity of the microdamages (ML).

15. A device according to any one of the preceding claims 8 to 14, **characterized in that** the roller (R) provided with punches or teeth (PZ) is adjustable as to its speed independently from the advancement speed of the microdamaged film (F).

## Patentansprüche

1. Verfahren zur Herstellung einer dünnen, verstärkten, streckbaren Verpackungsfolie,
**dadurch gekennzeichnet,**
**dass** es zunächst auf der Oberfläche einer streckbaren, zu verstärkenden Folie (F) eine Vielzahl von Mikroschäden (ML) schafft und dann ein Verbinden der mikrobeschädigten Folie (F) mit längslaufenden, vorgestreckten und eingefassten Verstärkungsstreifen vorsieht, wobei das Einfassen (B) mittels Nachinnenfalten der Streifenkanten vorgenommen wird.

2. Verfahren zur Herstellung einer dünnen, verstärkten, streckbaren Verpackungsfolie nach Anspruch 1,
**dadurch gekennzeichnet,**
**dass** die Streifen (S) parallel zueinander vorbestimmte Bereiche der Folienoberfläche abdecken und andere unbedeckt lassen, derart, dass die Folie über einen bestimmten Grad an Längenänderung in Bereichen, die nicht von den Streifen (S) abgedeckt werden, hinaus gestreckt wird, wobei bei manchen Schäden oder Schlitze ausgebildet werden, welche es den verpackten Produkten ermöglichen zu transpirieren, wobei die Schlitze aus lokal geschwächten Bereichen oder Mikroschäden (ML) in der Folie (F) ausgebildet werden.

3. Verfahren zur Herstellung einer dünnen, verstärkten, streckbaren Verpackungsfolie nach einem der vorherigen Ansprüche,
**dadurch gekennzeichnet,**
**dass** die Streifen von einer Spule zugeführt oder direkt von einer zweiten, streckbaren Folie (F2) bereitgestellt werden mittels Führen der zweiten Folie über eine Vielzahl an Messern (C), welche diese in längslaufende Streifen teilt, die anschließend mittels Strecken in Längsrichtung in ihrer Querrichtung geschmälert werden, wodurch parallele Streifen (S) erzeugt werden, welche zum Verbinden mit der mikrobeschädigten Folie (F) schmal genug sind und unbedeckte Bereiche zwischen sich freilassen.

4. Verfahren zur Herstellung einer dünnen, verstärkten, streckbaren Verpackungsfolie nach einem der vorherigen Ansprüche,
**dadurch gekennzeichnet,**
**dass** die Streifen (S) vor einem Verbinden mit der Folie (F) mittels Führen der Streifen durch Rollen (P), welche mit Rillen, die einen ebenen Boden und abgeschrägte Wände aufweisen, eingefasst werden, wobei die Breite des Rillenbodens geringer ist als die der ankommenden Streifen, so dass das gewünschte Falten der Streifenkanten bewirkt wird.

5. Verfahren zur Herstellung einer dünnen, verstärkten, streckbaren Verpackungsfolie nach einem der vorherigen Ansprüche,
**dadurch gekennzeichnet,**
**dass** für das Vorsehen der Mikroschäden (ML) auf der Folie (F), die Folie (F) zwischen einer Walze (R), welche mit kleinen, vorstehenden Stempeln (PZ) versehen ist, und einer Gegenwalze (CR) hindurchgeführt wird, welche die Folie (F) gegen die Stempel drückt, wodurch lokale Schwächungen oder Mikroschäden (ML), ohne Material zu entfernen oder wegzureißen, erzeugt werden.

6. Verfahren zur Herstellung einer streckbaren Folie (F) nach Anspruch 1,
**dadurch gekennzeichnet,**
**dass** es im Wesentlichen die folgenden Schritte zum Ausgeführtwerden auf der Folie (F) aus einem elastischen, spannbaren Materials, welches mit einer Vielzahl an auf seiner Oberfläche verteilten Mikroschäden (ML) versehen ist, aufweist:
a) Schneiden einer zweiten Folie (F2) in längslaufende, verstärkende Streifen (S) und Spannen und Einfassen dieser Streifen zum Schmälern und Erhöhen des Widerstands derselben;
b) Verbinden der eingefassten Streifen (S) mit der mikrobeschädigten Folie (F) mittels Führen derselben durch ein Paar Druckwalzen (RP);
c) Wickeln dieser so erzeugten mikrobeschädigten und verstärkten Folie auf eine Sammelspule (BR).

7. Verfahren zur Herstellung einer streckbaren Folie nach einem der vorherigen Ansprüche,
**dadurch gekennzeichnet,**
**dass**, wenn die Streifen bereits auf eine Spule gewickelt sind, offensichtlich ist, dass der obige Schritt a) nicht den Schneidebetrieb bereitstellt.

8. Vorrichtung zur Herstellung einer streckbaren Folie gemäß dem Verfahren nach Anspruch 1, **gekennzeichnet durch**
- eine erste Spule (B1), auf welcher eine erste Folie (F) zum Mikrobeschädigen aufgewickelt ist;
- eine Walze (R), welche mit vorstehenden Stempeln (P1) versehen ist, die zum Ausbilden kleiner, lokaler Schwächungen oder Mikrobeschädigungen auf der Folie (F) ausgebildet sind, und eine Gegenwalze (CR), welche die Folie (F) gegen die Stempel (PZ) drückt;
- eine zweite Spule (BR), auf welcher eine zweite Folie (F2) aufgewickelt ist, welche zum Teilen in längliche Streifen (S) zum Verbinden mit der obigen mikrobeschädigten Folie (F) nach dem Strecken und Einfassen (B) derselben vorgesehen ist;
- Mittel (P) zum Einfassen der Streifen (S);
- eine Vielzahl von Messern (C), welche zum Teilen der zweiten Folie (F2) in längslaufende Streifen (S) ausgebildet ist;
- ein Paar in entgegengesetzten Richtungen rotierenden Verbindungsdruckwalzen (RP), welche zum Aufbringen der gestreckten und eingefassten Streifen (S) auf der mikrobeschädigten Folie (F) geeignet sind; und
- eine Sammelspule (BC) für die Folie, welche mit lokal geschwächten Zonen versehen und mittels der länglichen Streifen (S) verstärkt ist.

9. Vorrichtung nach Anspruch 8,
**dadurch gekennzeichnet,**
**dass** sich die in längliche Streifen (S) zu schneidende Folie (F2) mit einer niedrigeren Geschwindigkeit als die mikrobeschädigten Folie (F) bewegt, so dass die Streifen in Längsrichtung gestreckt und folglich zum Erhalten einer Breite, welche geringfügig größer als die der Rollen (P), mittels derer das Einfassen ausführbar ist, ausgebildet ist, geschmälert werden.

10. Vorrichtung nach einem der Ansprüche 8 oder 9,
**dadurch gekennzeichnet,**
**dass** die Stempelwalze (R) und die Gegenwalze (CR) zwischen der Spule (B1), auf welcher die Folie (F) zum Mikrobeschädigen bereitgestellt ist, und den Verbindungsdruckwalzen (RP) angeordnet ist, wobei die Reihe von Messern (C) zwischen der Spule (B2), auf welcher die zweite, in längslaufende Streifen (S) zu schneidende Folie (F2) bereitgestellt ist, und den Verbindungswalzen (RP) angeordnet ist, wobei Rollen (P) zum Einfassen (F) der Streifen (S) direkt über diesen angeordnet sind.

11. Vorrichtung nach einem der Ansprüche 8 bis 10,
**dadurch gekennzeichnet,**
**dass** die Verbindungswalzen (RP) aus einer gummierten, freilaufenden Druckwalze und einer metallischen, angetriebenen Steuerungswalze ausgebildet sind.

12. Vorrichtung nach einem der vorherigen Ansprüche 8 bis 11,
**dadurch gekennzeichnet,**
**dass** sie eine oder mehrere Spann- und/oder Übertragungsrollen aufweist, die zur Regulierung der Bewegung der Folien geeignet sind und diese in gespanntem und gestrecktem Zustand halten.

13. Vorrichtung nach einem der Ansprüche 8 bis 12,
**dadurch gekennzeichnet,**
**dass**, wenn auf der zweiten Spule (B2) bereits Streifen (S) bereitgestellt sind, die Messer (C) nicht verwendet werden.

14. Vorrichtung nach einem der vorherigen Ansprüche 8 bis 13,
**dadurch gekennzeichnet,**
**dass** sie keine Gegenwalzen (CR) aufweist und mit einer einstellbaren Walze (RR) vorgesehen ist, welche zum Verändern des Abstands zwischen der Folie (F) und der Stempelwalze (R) für eine Anpassung der Beschaffenheit der Mikroschäden (ML) verstellbar ist.

15. Vorrichtung nach einem der vorherigen Ansprüche 8 bis 14,
**dadurch gekennzeichnet,**
**dass** die mit den Stempeln oder Zähnen (PZ) versehene Walze (R) bezüglich ihrer Geschwindigkeit unabhängig vom Vorschub der mikrobeschädigten Folie (F) einstellbar ist.

## Revendications

1. Procédé pour la production d'un film d'emballage étirable renforcé et mince, **caractérisé en ce qu'**il prévoit initialement de réaliser, sur la surface d'un film étirable (F) à renforcer, une pluralité de micro-endommagements (ML) puis de relier le film micro-endommagé (F) à des bandes de renforcement bordées et pré-étirées longitudinales ; ledit bordage (B) étant réalisé en pliant vers l'intérieur les bords de bande.

2. Procédé pour la production d'un film d'emballage étirable renforcé et mince selon la revendication 1, **caractérisé en ce que** lesdites bandes (S), parallèles les unes aux autres, recouvrent une zone établie de la surface du film (F) et laissent d'autres découvertes, de sorte que lorsque le film est étiré au-delà d'un certain degré d'allongement, dans les zones non recouvertes par les bandes (S) il se forme des endommagements ou fentes, qui permettent aux produits emballés de transpirer, lesdites fentes étant formées sur des zones d'affaiblissement localisées ou des micro-endommagements (ML) formés dans le film (F).

3. Procédé pour la production d'un film d'emballage étirable renforcé et mince selon l'une quelconque des revendications précédentes, **caractérisé en ce que** lesdites bandes proviennent d'une bobine ou sont directement obtenues à partir d'un deuxième film étirable (F2) en faisant passer ledit deuxième film sur une pluralité de lames (C) qui le divisent en bandes longitudinales, lesquelles sont ensuite transversalement rétrécies par un étirage longitudinal, obtenant ainsi des bandes parallèles (S) qui sont assez étroites pour être reliées audit film micro-endommagé (F) ci-dessus et laissant des zones découvertes entre elles.

4. Procédé pour la production d'un film d'emballage étirable renforcé et mince selon l'une quelconque des revendications précédentes, **caractérisé en ce que**, avant d'être reliées au film (F), lesdites bandes (S) sont bordées en les faisant passer à travers des poulies (P) munies de rainures ayant un fond plat et des parois inclinées, la largeur au fond des rainures étant inférieure à celle des bandes entrantes, de manière à obtenir le pliage souhaité des bords de bande.

5. Procédé pour la production d'un film d'emballage étirable renforcé et mince selon l'une quelconque des revendications précédentes, **caractérisé en ce que**, pour réaliser les micro-endommagements (ML) sur le film (F), ledit film est passé entre un rouleau (R) muni de petits poinçons en saillie (PZ) et un contre-rouleau (CR) qui presse le film (F) contre lesdits poinçons, entraînant ainsi des affaiblissements locaux ou micro-endommagements (ML), sans retirer ni déchirer le matériau.

6. Procédé pour la production d'un film étirable (F) selon la revendication 1, **caractérisé en ce qu'**il comprend sensiblement les étapes suivantes à effectuer sur le film (F) d'un matériau étirable élastique ayant une pluralité de micro-endommagements (ML) répartis sur sa surface :
a) découper un deuxième film (F2) dans des bandes de renforcement longitudinales (S), et étirer et border lesdites bandes pour les rétrécir et augmenter leur résistance ;
b) relier lesdites bandes bordées (S) audit film micro-endommagé (F) en les faisant passer à travers une paire de rouleaux de pression (RP) ;
c) enrouler le film micro-endommagé et renforcé ainsi obtenu sur une bobine de collecte (BR).

7. Procédé pour la production d'un film étirable selon la revendication précédente, **caractérisé en ce que**, si les bandes sont déjà enroulées sur une bobine, il est évident que ladite étape a) ci-dessus ne prévoit pas l'opération de découpe.

8. Dispositif pour produire un film étirable selon le procédé de la revendication 1, **caractérisé en ce qu'**il comprend :
• une première bobine (B1) sur laquelle un premier film (F) à micro-endommager est enroulé ;
• un rouleau (R) muni de poinçons en saillie (P1) pouvant réaliser de petits affaiblissements localisés ou micro-endommagements sur le film (F) et un contre-rouleau (CR) qui presse le film (F) contre lesdits poinçons (PZ) ;
• une deuxième bobine (BR) sur laquelle un deuxième film (F2) est collecté, lequel est destiné à être divisé en bandes longitudinales (S) à relier audit film micro-endommagé (F) ci-dessus après leur étirage et bordage (B) ;
• des moyens (P) pour border lesdites bandes (S) ;
• une pluralité de lames (C) pouvant diviser le deuxième film (F2) en bandes longitudinales (S) ;
• une paire de rouleaux de pression de liaison (RP) tournant dans des directions opposées, pouvant superposer les bandes étirées et bordées (S) sur le film micro-endommagé (F) ;
• une bobine de collecte (BC) pour le film muni de zones d'affaiblissement localisées et renforcé par lesdites bandes longitudinales (S).

9. Dispositif selon la revendication précédente, **caractérisé en ce que** le film (F2) à découper en bandes longitudinales (S) se déplace à une vitesse qui est inférieure à celle du film micro-endommagé (F), de sorte que les bandes soient longitudinalement étirées et ainsi rétrécies de manière à atteindre une largeur légèrement supérieure à celle des poulies (P), qui effectuent leur bordage.

10. Dispositif selon la revendication 8 ou 9, **caractérisé en ce que** ledit rouleau de poinçonnage (R) et ledit contre-rouleau (CR) sont agencés entre la bobine (B1), sur laquelle est stocké le film (F) à micro-endommager, et les rouleaux de pression de liaison (RP), la série de lames (C) est agencée entre la bobine (B2), sur laquelle est stocké le deuxième film (F2) à découper en bandes longitudinales (S), et lesdits rouleaux de liaison (RP), tandis que les poulies (P), pour border (B) les bandes (S), sont placées juste au-dessus.

11. Dispositif selon l'une quelconque des revendications 8 à 10, **caractérisé en ce que** lesdits rouleaux de liaison (RP) ci-dessus sont formés par un rouleau de pression libre caoutchouté et un rouleau de commande motorisé métallique.

12. Dispositif selon l'une quelconque des revendications 8 à 11, **caractérisé en ce qu'**il comprend un ou plusieurs rouleaux de tension et/ou transmission, pouvant régulariser le mouvement des films et les maintenir dans des états tendus et étirés.

13. Dispositif selon l'une quelconque des revendications 8 à 12, **caractérisé en ce que**, lorsque sur la deuxième bobine (B2) il y a déjà des bandes (S) stockées, les lames (C) ne sont pas utilisées.

14. Dispositif selon l'une quelconque des revendications 8 à 13, **caractérisé en ce qu'**il ne comporte pas de contre-rouleau (CR) et est muni d'un rouleau réglable (RR), qui peut être déplacé pour changer la distance entre le film (F) et le rouleau de poinçonnage (R) pour régler ainsi l'entité des micro-endommagements (ML).

15. Dispositif selon l'une quelconque des revendications 8 à 14, **caractérisé en ce que** la vitesse du rouleau (R) muni de poinçons ou dents (PZ) est réglable indépendamment de la vitesse d'avancement du film micro-endommagé (F).
